# EUROPÄISCHE PATENTSCHRIFT

(11) **EP 3 526 500 B1**
(45) Veröffentlichungstag und Bekanntmachung des Hinweises auf die Patenterteilung: **23.12.2020**
(21) Anmeldenummer: 17757725.1
(22) Anmeldetag: 16.08.2017
(51) Int. Cl.: F16K 31/06, F15B 13/04, B60T 13/66, B60T 13/68

(54) **MAGNETVENTIL UND HYDRAULISCHES BREMSSYSTEM FÜR EIN FAHRZEUG**
SOLENOID VALVE AND HYDRAULIC BRAKING SYSTEM FOR A VEHICLE
ÉLECTROVANNE ET SYSTÈME DE FREINAGE HYDRAULIQUE POUR VÉHICULE

(30) Priorität: 13.10.2016 DE 102016219957
(43) Veröffentlichungstag der Anmeldung: 21.08.2019
(73) Patentinhaber: Robert Bosch GmbH, 70442 Stuttgart (DE)
(72) Erfinder: KRATZER, Dietmar, 71732 Tamm (DE)
(86) Internationale Anmeldenummer: PCT/EP2017/070742
(87) Internationale Veröffentlichungsnummer: WO 2018/068929

(56) Entgegenhaltungen:
- WO-A1-2011/050877
- DE-A1- 10 101 247
- DE-A1- 19 548 580
- DE-A1- 19 842 023
- DE-A1-102006 055 833
- DE-A1-102007 007 784
- DE-A1-102012 209 729
- FR-A1- 2 847 326
- JP-A- 2011 084 147
- US-A1- 2011 147 625

## Beschreibung

Die Erfindung geht aus von einem Magnetventil für ein hydraulisches Bremssystem nach der Gattung des unabhängigen Patentanspruchs 1. Gegenstand der vorliegenden Erfindung ist auch ein hydraulischen Bremssystem für ein Fahrzeug mit einem solchen Magnetventil.

Aus dem Stand der Technik sind hydraulische Bremssysteme für Fahrzeuge mit einem Hauptbremszylinder, einer Hydraulikeinheit und mehreren Radbremsen bekannt, die verschiedene Sicherheitssysteme, wie beispielsweise ein Antiblockiersystem (ABS), elektronisches Stabilitätsprogramm (ESP) usw. umfassen, und verschiedene Sicherheitsfunktionen, wie beispielsweise eine Antiblockierfunktion, eine Antriebsschlupfregelung (ASR) usw. ausführen können. Über die Hydraulikeinheit können Steuer- und/oder Regelvorgänge im Antiblockiersystem (ABS) oder im Antriebsschlupfregelsystem (ASR-System) oder im elektronischen Stabilitätsprogrammsystem (ESP-System) für den Druckaufbau bzw. Druckabbau in den korrespondierenden Radbremsen durchgeführt werden. Zur Durchführung der Steuer- und/oder Regelvorgänge umfasst die Hydraulikeinheit Magnetventile, welche aufgrund der gegensätzlich wirkenden Kräfte "Magnetkraft", "Federkraft" und "Hydraulikkraft" meist in eindeutigen Positionen gehalten werden. Dementsprechend gibt es die Ventilarten "stromlos offen" und "stromlos geschlossen". Diese Magnetventile umfassen jeweils eine Magnetbaugruppe und eine Ventilpatrone, welche einen Polkern, eine mit dem Polkern verbundene Führungshülse, einen innerhalb der Führungshülse gegen die Kraft einer Rückstellfeder zwischen einer Geschlossenposition und einer Offenposition axial beweglich geführten Anker mit einem Stößel und einem Schließelement und einen mit der Führungshülse verbundene Ventilhülse mit einem Ventilsitz umfasst. Durch die Bestromung der Magnetbaugruppe wird eine Magnetkraft erzeugt, welche den Anker mit dem Stößel und dem Schließelement bei einem unbestromt offenen Magnetventil von der Offenstellung in die Geschlossenstellung bewegt bis das Schließelement auf den korrespondierenden Ventilsitz trifft und diesen abdichtet. Im unbestromten Zustand bewegt die Rückstellfeder den Anker mit dem Stößel und dem Schließelement und das Schließelement hebt vom Ventilsitz ab und gibt diesen frei. Bei einem unbestromt geschlossenen Magnetventil wird der Anker mit dem Stößel und dem Schließelement durch die Bestromung der Magnetbaugruppe von der Geschlossenstellung in die Offenstellung bewegt und das Schließelement hebt aus dem Ventilsitz ab und gibt diesen frei. Wird der Strom abgeschaltet, dann bewegt die Rückstellfeder den Magnetanker mit dem Schließelement in Richtung Ventilsitz bis das Schließelement auf den Ventilsitz trifft und diesen abdichtet. Mit dieser Bestromung geht Energieverbrauch einher, der unerwünscht ist. Darüber hinaus ist die Funktionssicherheit bzw. Funktionsverfügbarkeit nicht im erwünschten Umfang gegeben, wenn die Funktion nur über aktive Bestromung erreicht wird.

In der Offenlegungsschrift DE 10 2007 051 557 A1 wird beispielsweise ein stromlos geschlossenes Magnetventil für eine schlupfgeregelte, hydraulische Fahrzeugbremsanlage beschrieben. Das Magnetventil umfasst einen auch als Ventilpatrone bezeichneten hydraulischen Teil, welcher teilweise in einer abgestuften Bohrung eines Ventilblocks angeordnet ist, und einen elektrischen Teil, welcher im Wesentlichen aus einer Magnetbaugruppe gebildet ist, welche auf den aus dem Ventilblock ragenden Teil der Ventilpatrone aufgesteckt ist. Die Magnetbaugruppe umfasst einen Spulenkörper mit einer elektrischen Wicklung, einen magnetflussleitenden Spulenmantel und eine magnetflussleitende Ringscheibe. Der hydraulische Teil weist eine Führungshülse auf, welche an ihrem dem elektrischen Teil zugewandten Ende mit einem eingepressten und fluiddicht verschweißten Polkern verschlossen ist. In der Führungshülse ist ein längsverschiebbarer Anker aufgenommen, welcher mit einer Rückstellfeder am Polkern abgestützt ist. Polkernabgewandt weist der Anker einen in einer Vertiefung angeordneten kugelförmigen Schließkörper auf. Am polkernabgewandten Ende ist in die Führungshülse eine topfförmige Ventilhülse mit einem zylindrischen Mantel und einem Boden eingepresst. Die Ventilhülse weist am Boden einen Durchgang sowie einen hohlkegelförmigen Ventilsitz auf, welcher mit dem Schließkörper ein Sitzventil ausbildet. Mit dem Sitzventil ist eine Fluidverbindung zwischen dem Durchgang am Boden der Ventilhülse und mindestens einem Durchgang im Mantel der Ventilhülse schaltbar ausgeführt. Zudem ist außen am Mantel der Ventilhülse ein Radialfilter angeordnet, um Schmutzpartikel aus der Fluidströmung zu filtern. Die Führungshülse kann mittels einer Befestigungsbuchse in der Stufenbohrung des Ventilblocks verstemmt werden.

Aus der EP 0 073 886 B1 ist ein hydraulisches Steuergerät mit einem axial in mehrere Schaltstellungen verschiebbaren und mittels einer Rückstellfeder selbsttätig in eine seiner Schaltstellungen zurückgehenden Steuerschieber bekannt, welcher außerhalb dieser Schaltstellung durch eine in Raststellen eingreifendes federbelastete Raste festlegbar ist, welche ferner durch ein als Kolben in einer Gehäusebohrung geführtes und über einen angrenzenden Ringraum mit Druckflüssigkeit beaufschlagbares Teil hydraulisch betätigbar ist. Der Ringraum steht über ein Vorsteuerventil mit der zum Verbraucher führenden Pumpendruckleitung in Verbindung, welche bei Abschaltung des bzw. der Verbraucher druckentlastet ist. Hierbei ist der hydraulische Stellweg der Raste gegenüber ihrem gegen Federkraft möglichen Stellweg begrenzt und die Raststellen am Steuerschieber zum Ein- bzw. Hintergreifen der Raste sind radial so bemessen, dass ein hydraulischen Auslösen der Raste unabhängig von dem gegen Federkraft möglichen Stellweg nur an den dafür vorgesehenen Raststellungen möglich ist.

Ein weiteres Beispiel von Magnetventil ist ebenfalls aus der DE 101 01 247 A1 bekannt.

### Offenbarung der Erfindung

Das Magnetventil für ein hydraulisches Bremssystem mit den Merkmalen des unabhängigen Patentanspruchs 1 hat den Vorteil, dass in einem Magnetventil mit einem stromlosen ersten Betriebszustand ein weiterer stromloser zweiter Betriebszustand umgesetzt werden kann. Das bedeutet, dass Ausführungsformen der vorliegenden Erfindung ein bistabiles Magnetventil zur Verfügung stellen, welches durch Anlegen eines Umschaltsignals zwischen den beiden Betriebszuständen umgeschaltet werden kann, wobei das Magnetventil dauerhaft bis zum nächsten Umschaltsignal im jeweiligen Betriebszustand verbleibt. Hierbei kann der erste Betriebszustand einer Geschlossenstellung des Magnetventils und der zweite Betriebszustand kann einer Offenstellung des Magnetventils entsprechen. Der Wechsel zwischen den beiden Betriebszuständen kann beispielsweise durch kurze Bestromung des aktiven Stellglieds der Magnetbaugruppe bzw. durch Anlegen eines Umschaltsignals bzw. Stromimpulses an die Magnetbaugruppe durchgeführt werden. Mit einer solchen kurzen Bestromung kann der Energieverbrauch im Vergleich mit einem herkömmlichen Magnetventil mit zwei Betriebszuständen in vorteilhafter Weise reduziert werden, welches nur einen stromlosen ersten Betriebszustand aufweist und zur Umsetzung des bestromten zweiten Betriebszustandes für die Dauer des zweiten Betriebszustandes bestromt werden muss. Darüber hinaus ist die Funktionssicherheit bzw. Funktionsverfügbarkeit im Gegensatz zu Ausführungsformen der vorliegenden Erfindung nicht im erwünschten Umfang gegeben, wenn die Funktion nur über aktive Bestromung erreicht werden kann.

Ausführungsformen der vorliegenden Erfindung stellen ein Magnetventil für ein hydraulisches Bremssystem, mit einer Magnetbaugruppe, einem Polkern, einer mit dem Polkern verbundene Führungshülse, einem innerhalb der Führungshülse axial beweglich geführten Ventilanker, welcher von einer durch die Magnetbaugruppe erzeugten Magnetkraft gegen die Kraft mindestens einer Rückstellfeder oder durch die Kraft der mindestens einen Rückstellfeder antreibbar ist und einen Stößel mit einem Schließelement axial bewegt, und einem mit der Führungshülse verbundenen Ventilkörper mit einem Ventilsitz zur Verfügung, welcher zwischen mindestens einer ersten Strömungsöffnung und mindestens einer zweiten Strömungsöffnung angeordnet ist. Hierbei ist der Stößel axial beweglich im Ventilanker gelagert ist, wobei zwischen einem ortsfesten Führungsbauteil, welches in die Führungshülse eingeführt ist, und dem Stößel eine mechanische Rastvorrichtung ausgebildet ist, welche den Stößel in einer stromlosen Geschlossenstellung freigibt, so dass eine erste Rückstellfeder das Schließelement zur Ausführung einer Dichtfunktion dichtend in den Ventilsitz drückt, und den Stößel in einer stromlosen Offenstellung gegen die Kraft der ersten Rückstellfeder in einer axialen Raststellung so festlegt, dass das Schließelement vom Ventilsitz abgehoben ist. In der stromlosen Geschlossenstellung ist die Fluidströmung zwischen der mindestens einen ersten Strömungsöffnung und der mindestens einen zweiten Strömungsöffnung unterbrochen und in der stromlosen Offenstellung wird die Fluidströmung zwischen der mindestens einen ersten Strömungsöffnung und der mindestens einen zweiten Strömungsöffnung ermöglicht.

Ausführungsformen des erfindungsgemäßen Magnetventils weisen in vorteilhafter Weise eine sehr geringe Leckage in der Geschlossenstellung und einen geringen Energieverbrauch in der Offenstellung auf.

Zudem wird ein hydraulisches Bremssystem für ein Fahrzeug vorgeschlagen, welches einen Hauptbremszylinder, eine Hydraulikeinheit und mehrere Radbremsen umfasst. Zudem umfasst die Hydraulikeinheit mindestens zwei Bremskreise zur Bremsdruckmodulation in den Radbremsen. Hierbei weisen die mindestens zwei Bremskreise jeweils mindestens ein erfindungsgemäßes Magnetventil auf, welches in der stromlosen Offenstellung die Bremsdruckmodulation in mindestens einer zugeordneten Radbremse freigibt und in der stromlosen Geschlossenstellung einen aktuellen Bremsdruck in der mindestens einen zugeordneten Radbremse einschließt.

Das hydraulisches Bremssystem für ein Fahrzeug mit den Merkmalen des unabhängigen Patentanspruchs 15 hat den Vorteil, dass mit geringem Zusatzaufwand an einer meist vorhandenen Hydraulikeinheit mit ESP-Funktionalität eine Zusatzfunktion realisiert werden kann, welche einen aktuellen Bremsdruck in der korrespondierenden Radbremse elektro-hydraulisch einschließen und bei geringem Energiebedarf über einen längeren Zeitraum halten kann. Das bedeutet, dass die vorhandene Druckversorgung, die Rohrleitungen von der Hydraulikeinheit bis zu den Radbremsen sowie Sensor- und Kommunikationssignale nicht nur für die ESP-Funktion und/oder ABS-Funktion und/oder ASR-Funktion sondern auch für eine elektro-hydraulische Druckhaltefunktion in den Radbremsen verwendet werden können. Dadurch können in vorteilhafter Weise Kosten, Bauraum, Gewicht und Verkabelung mit dem positiven Effekt eingespart werden, dass sich die Komplexität des Bremssystems reduziert.

Durch die in den abhängigen Ansprüchen aufgeführten Maßnahmen und Weiterbildungen sind vorteilhafte Verbesserungen des im unabhängigen Patentanspruch 1 angegebenen Magnetventils für ein hydraulisches Bremssystem möglich.

Besonders vorteilhaft ist, dass die mechanische Rastvorrichtung als Drehnockenmechanismus ausgeführt ist, welcher eine Umfangskraftkomponente nutzt, um den Stößel mit dem Schließelement axial in die Raststellung hinein und wieder heraus zu bewegen, so dass das Schließelement in vorteilhafter Weise durch Anlegen eines Umschaltsignals bzw. Stromimpulses an die Magnetbaugruppe einfach zwischen den beiden stromlosen Stellungen wechseln kann. Ausgehend von der stromlosen Geschlossenstellung kann das Schließelement durch Anlegen eines Umschaltsignals von der stromlosen Geschlossenstellung in die stromlose Offenstellung wechseln. Bei Anlegen eines nachfolgenden Umschaltsignals wechselt das Schließelement zurück von der stromlosen Offenstellung in die stromlose Geschlossenstellung. Ausgehend von der stromlosen Offenstellung kann das Schließelement durch Anlegen eines Umschaltsignals von der stromlosen Offenstellung in die stromlose Geschlossenstellung wechseln. Bei Anlegen eines nachfolgenden Umschaltsignals wechselt das Schließelement zurück von der stromlosen Geschlossenstellung in die stromlose Offenstellung.

In vorteilhafter Ausgestaltung des Magnetventils kann an einem dem Ventilsitz zugewandten Ende eine Vertiefung in einen Grundkörper des Ventilankers eingebracht werden, welche den Stößel und einen Ankereinsatz teilweise aufnehmen kann. Die erste Rückstellfeder kann zwischen dem ortsfesten Führungsbauteil und dem Stößel wirken, wobei der Stößel in einer ersten Durchgangsöffnung des ortsfesten Führungsbauteils und in einer zweiten Durchgangsöffnung des Ankereinsatzes radial geführt werden kann und vom Ventilanker axial in Richtung Polkern und von der ersten Rückstellfeder in Richtung Ventilsitz bewegt werden kann.

In weiterer vorteilhafter Ausgestaltung des Magnetventils kann der Stößel einen zylindrischen Grundkörper aufweisen, an welchem eine erste Führungsgeometrie und eine in Längsrichtung beabstandete zweite Führungsgeometrie ausgebildet werden können. Bei der axialen Bewegung des Stößels kann die erste Führungsgeometrie des Stößels mit einer am Grundkörper des Führungsbauteils ausgebildeten dritten Führungsgeometrie zusammenwirken, und die zweite Führungsgeometrie des Stößels kann mit einer am Grundkörper des Ankereinsatzes ausgebildeten vierten Führungsgeometrie zusammenwirken. Das Führungsbauteil kann beispielsweise einen als Ringscheibe ausgeführten Grundkörper aufweisen. Der Stößel, der Ankereinsatz und das Führungsbauteil können vorzugsweise als Kunststoffbauteile in einem Spritzgussverfahren hergestellt werden. Alternativ können die Teile durch Pulver-Injection-Moulding (PIM) oder Ceramic-Injection-Moulding (CIM) oder Metal-Injection-Moulding (MIM) usw. oder durch 3D-Drucken hergestellt werden. Zudem kann der Stößel an seiner Spitze einteilig als Schließelement für den Ventilsitz ausgeführt werden. Alternativ kann der Stößel mehrteilig ausgeführt werden und beispielsweise ein zusätzliches Dichtelement, wie beispielsweise eine O-Ring-Dichtung, aufweisen, welches im Bereich des Schließelements angeordnet ist und die Dichtwirkung in der Geschlossenstellung verbessert. Zudem ist eine Aufteilung der Stößelgeometrie in weitere Teile möglich. Der Ventilanker kann einen zylindrischen Grundkörper aufweisen, welcher an einer Innenwand der Führungshülse radial geführt werden kann. Zudem kann ein zylindrischer Abschnitt des Grundkörpers des Ankereinsatzes in einen korrespondierenden Abschnitt der Vertiefung des Ventilankers eingeführt werden und die vierte Führungsgeometrie aufweisen. Der Ankereinsatz kann eine fünfte Führungsgeometrie aufweisen, welche bei einer axialen Bewegung des Ventilankers mit einer sechsten Führungsgeometrie des Grundkörpers des ortsfesten Führungsbauteils zusammenwirken und den Ventilanker axial führen kann. Aufgrund der Anforderung der magnetischen Leitfähigkeit wird der Ventilanker aus einem magnetisch leitfähigen Werkstoff beispielsweise im Kaltschlagverfahren oder spanend hergestellt. Der Polkern ist ebenfalls aus einem magnetisch leitfähigen Werkstoff hergestellt. Der zylindrische Abschnitt des Grundkörpers des Ankereinsatzes kann beispielsweise in die Vertiefung des Ventilankers einpresst werden. Das Führungsbauteil kann mehrere am Umfang verteilte Einpressstege aufweisen und über diese in die Führungshülse eingepresst und festgelegt werden.

In weiterer vorteilhafter Ausgestaltung des Magnetventils kann die fünfte Führungsgeometrie mindestens zwei Führungsschenkel aufweisen, welche an den zylindrischen Abschnitt des Grundkörpers angebunden sind. Die sechste Führungsgeometrie kann mindestens zwei Öffnungen im Grundkörper des ortsfesten Führungsbauteils umfassen, deren Abmessungen an die Abmessungen der Führungsschenkel angepasst sind. Hierbei können die mindestens zwei Führungsschenkel jeweils in eine der Öffnungen eingeführt und bei einer Axialbewegung des Ventilankers axial in diesen geführt werden.

In weiterer vorteilhafter Ausgestaltung des Magnetventils kann die erste Führungsgeometrie mehrere erste Ausformungen in gleichmäßiger Teilung am Umfang des Grundkörpers des Stößels umfassen, welche jeweils eine einseitige Abschrägung aufweisen. Die dritte Führungsgeometrie des ortsfesten Führungsbauteils kann an einer Wandung der ersten Durchgangsöffnung in gleichmäßiger Winkelteilung Axialnuten mit mindestens zwei unterschiedlichen Tiefen in radialer Richtung aufweisen, wobei Zwischenstege der Axialnuten einseitige Anschrägungen aufweisen können, welche an die einseitigen Abschrägungen der ersten Ausformungen des Stößels angepasst sind. Zudem kann die zweite Führungsgeometrie an einem ersten Ende des Stößels mehrere zweite Ausformungen umfassen, welche in gleichmäßiger Teilung versetzt zu den ersten Ausformungen am Umfang des Grundkörpers des Stößels angeordnet werden können und jeweils eine einseitige Abschrägung aufweisen. Die zweiten Ausformungen können sich bei der axialen Bewegung in Richtung Polkern auf der vierten Führungsgeometrie des Ankereinsatzes abstützen, welche am Rand der zweiten Durchgangsöffnung des Ankereinsatzes in gleichmäßiger Winkelteilung eingebrachte Nuten mit zweiseitigen Anschrägungen umfasst kann, welche an die einseitigen Abschrägungen der zweiten Ausformungen des Stößels angepasst sind.

In weiterer vorteilhafter Ausgestaltung des Magnetventils kann der Ventilanker bei einer durch Magnetkraft der Magnetbaugruppe bewirkten Axialbewegung in Richtung Polkern den eingeführten Ankereinsatz und mit den Nuten des Ankereinsatzes den Stößel über seine zweiten Ausformungen mitnehmen, wobei durch die Anschrägungen der Nuten und die Abschrägungen der zweiten Ausformungen des Stößels während der Axialbewegung in Richtung Polkern eine Umfangskraft auf den Stößel wirken kann, welche versucht den Stößel um seine Längsachse zu drehen. Hierbei kann die gleichzeitige Führung der ersten Ausformungen des Stößels in den Axialnuten des ortsfesten Führungsbauteils und/oder der Führungsstege des Ankereinsatzes in den Öffnungen des ortsfesten Führungsbauteils diese Drehbewegung solange verhindern, bis der Stößel einen vorgegebenen Axialhub erreicht und die ersten Ausformungen des Stößels die Axialnuten des ortsfesten Führungsbauteils verlassen und aufgrund der immer noch wirkenden Umfangskraft tiefer in die Nuten rutschen können. Zudem können die zweiten Ausformungen des Stößels aufgrund der an den Zwischenstegen der Axialnuten ausgebildeten einseitigen Anschrägungen in die nächsten Axialnuten des ortsfesten Führungsbauteils rutschen und der neuen Führung durch eine Radialbewegung folgen, wenn sich der Axialhub des Ventilankers und des Stößels aufgrund der wirkenden Federkraft der ersten Rückstellfeder reduziert, wobei die zweiten Ausformungen des Stößels gleichzeitig in die jeweils nächste Nut rutschen. So können beispielsweise in der stromlosen Offenstellung mindestens zwei erste Ausformungen des Stößels jeweils in einer in radialer Richtung flacheren Axialnut axial gehalten werden, wobei die Abschrägungen der ersten Ausformungen an zweiten Anschrägungen anliegen können, welche am Rand der flacheren Axialnuten ausgebildet sind. In der stromlosen Geschlossenstellung können alle ersten Ausformungen des Stößels jeweils in einer in radialer Richtung tieferen Axialnut bis zum Anschlag des Schließelements im Ventilsitz geführt werden. Die Anzahlen und Winkelteilungen der verschiedenen Ausformungen und Nuten sowie die jeweiligen Schrägungswinkel können in Abhängigkeit von den Dimensionen des Magnetventils sinnvoll gewählt werden, um mit einem üblichen magnetischen axialen Luftspalt die verschiedenen Hubstellungen über eine Magnetkraft anfahren zu können, welche von einer marktüblichen Magnetbaugruppe erzeugt wird. Bei anderen Verhältnissen können die Anzahlen, Winkelteilungen, Schrägungswinkel usw. entsprechend angepasst werden.

In weiterer vorteilhafter Ausgestaltung des Magnetventils kann zwischen dem Ventilanker und dem Polkern eine zweite Rückstellfeder angeordnet werden, welche den Ventilanker in Richtung Ventilsitz bewegen kann. Die zweite schließend wirkende Rückstellfeder ist vorzugsweise als sehr federweiche Druckfeder ausgeführt und drückt den Ventilanker im stromlosen Zustand ständig an die jeweils mögliche unterste Position in Richtung Ventildichtsitz. Dadurch kann in vorteilhafter Weise eine undefinierte Lage des Ventilankers, ein Ankerkleben am Polkern und Ankerklappern oder ähnliches vermieden werden. Zudem kann in den Grundkörper des Ventilankers eine Federaufnahme eingebracht werden, welche die zweite Rückstellfeder zumindest teilweise aufnehmen kann.

In weiterer vorteilhafter Ausgestaltung des Magnetventils kann der Stößel mehrteilig ausgeführt werden, wobei der Grundkörper des Stößels zwischen der ersten und zweiten Führungsgeometrie gefügt werden kann. So können die Stößelteile einzeln montiert und dann beispielsweise durch eine Stift-Bohrung-Pressverbindung zusammengefügt werden.

In weiterer vorteilhafter Ausgestaltung des Magnetventils kann der Ankereinsatz mehrteilig ausgeführt werden. So kann der Ankereinsatz beispielsweise zwei Ringhälften aufweisen, welche vor dem Einführen in die Vertiefung des Ventilankers um den Stößel herumgelegt werden und sich leicht überdecken können. Die Ankereinsatzhälften umschließen den Stößel vorzugsweise zwischen seinen ersten und zweiten Ausformungen.

Ausführungsbeispiele der Erfindung sind in der Zeichnung dargestellt und werden in der nachfolgenden Beschreibung näher erläutert. In der Zeichnung bezeichnen gleiche Bezugszeichen Komponenten bzw. Elemente, die gleiche bzw. analoge Funktionen ausführen.

### Kurze Beschreibung der Zeichnungen

Fig. 1 zeigt eine schematische perspektivische Schnittdarstellung eines Ausführungsbeispiels eines erfindungsgemäßen Magnetventils in seiner stromlosen Geschlossenstellung.
Fig. 2 zeigt eine schematische perspektivische Darstellung eines Ausführungsbeispiels eines Stößels für das Magnetventil aus Fig. 1.
Fig. 3 zeigt eine schematische perspektivische Darstellung eines Ausführungsbeispiels einer Führungsbauteils für das Magnetventil aus Fig. 1.
Fig. 4 zeigt eine schematische perspektivische Darstellung des in das Führungsbauteil aus Fig. 3 eingeführten Stößels aus Fig. 2.
Fig. 5 zeigt eine schematische perspektivische Schnittdarstellung eines Ausführungsbeispiels eines Ankereinsatzes für das Magnetventil aus Fig. 1.
Fig. 6 zeigt eine schematische perspektivische Schnittdarstellung des teilweise in den Ankereinsatz aus Fig. 5 und das Führungsbauteil aus Fig. 3 eingeführten Stößels aus Fig. 2.
Fig. 7 zeigt eine schematische perspektivische Schnittdarstellung des erfindungsgemäßen Magnetventils aus Fig. 1 in seiner stromlosen Offenstellung.
Fig. 8 zeigt einen schematischen Hydraulikschaltplan eines Ausführungsbeispiels eines erfindungsgemäßen hydraulischen Bremssystems für ein Fahrzeug.

### Ausführungsformen der Erfindung

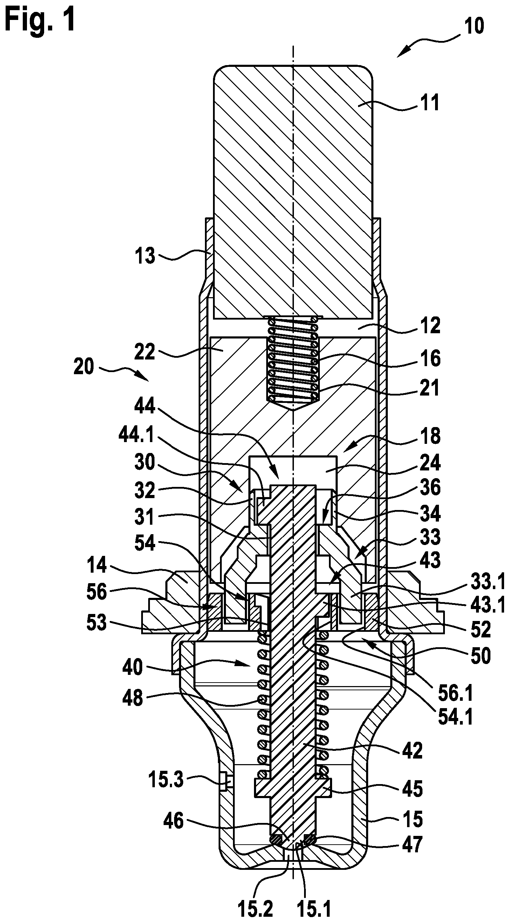

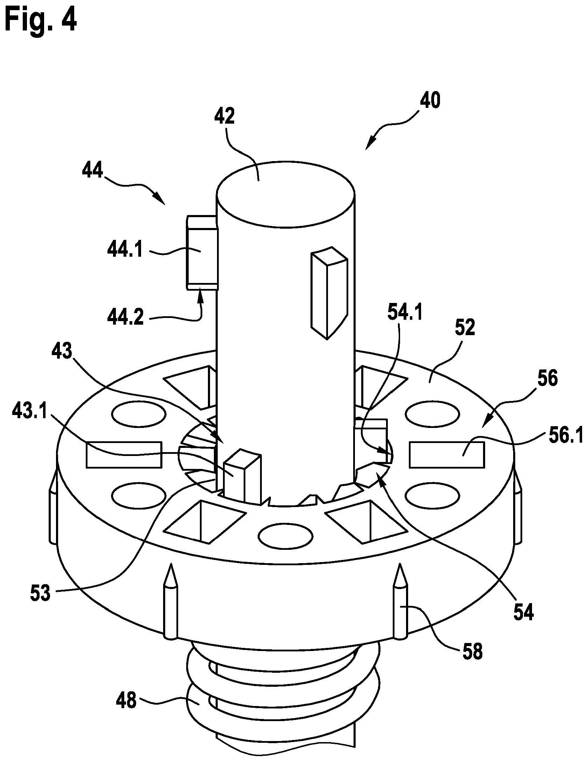

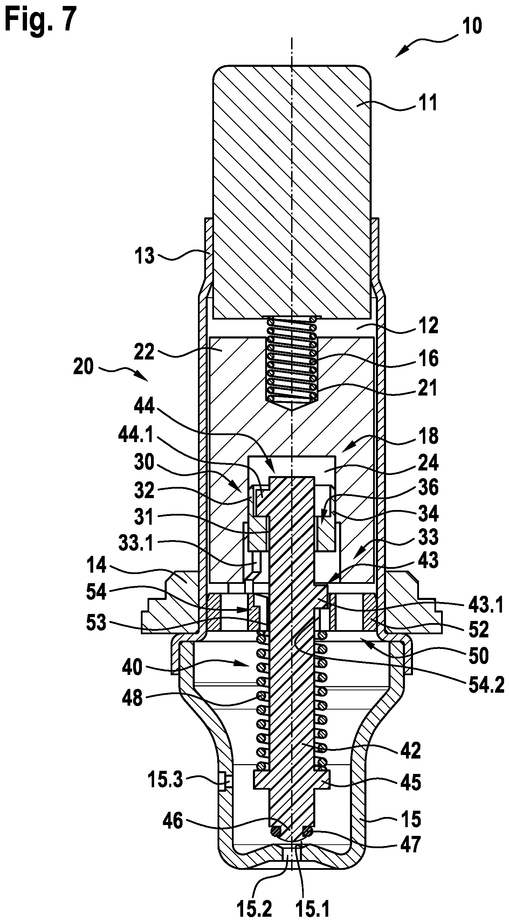

Wie aus Fig. 1 bis 7 ersichtlich ist, umfasst das dargestellte Ausführungsbeispiel eines erfindungsgemäßen Magnetventils 10 für ein hydraulisches Bremssystem 1 eine nicht dargestellte Magnetbaugruppe, einen Polkern 11, eine mit dem Polkern 11 verbundene Führungshülse 13, einen innerhalb der Führungshülse 13 axial beweglich geführten Ventilanker 20, welcher von einer durch die Magnetbaugruppe erzeugten Magnetkraft gegen die Kraft mindestens einer Rückstellfeder 16, 48 oder durch die Kraft der mindestens einen Rückstellfeder 16, 48 antreibbar ist und einen Stößel 40 mit einem Schließelement 46 axial bewegt, und einen mit der Führungshülse 13 verbundenen Ventilkörper 15 mit einem Ventilsitz 15.1, welcher zwischen mindestens einer ersten Strömungsöffnung 15.2 und mindestens einer zweiten Strömungsöffnung 15.3 angeordnet ist. Hierbei ist der Stößel 40 axial beweglich im Ventilanker 20 gelagert, wobei zwischen einem ortsfesten Führungsbauteil 50, welches in die Führungshülse 13 eingeführt ist, und dem Stößel 40 eine mechanische Rastvorrichtung 18 ausgebildet ist, welche den Stößel 40 in einer in Fig. 1 dargestellten stromlosen Geschlossenstellung freigibt, so dass eine erste Rückstellfeder 48 das Schließelement 46 zur Ausführung einer Dichtfunktion dichtend in den Ventilsitz 15.1 drückt und eine Fluidströmung zwischen der mindestens einen ersten Strömungsöffnung 15.2 und der mindestens einen zweiten Strömungsöffnung 15.3 unterbricht, und den Stößel 40 in einer in Fig. 7 dargestellten stromlosen Offenstellung gegen die Kraft der ersten Rückstellfeder 48 in einer axialen Raststellung so festlegt, dass das Schließelement 46 vom Ventilsitz 15.1 abgehoben und die Fluidströmung zwischen der mindestens einen ersten Strömungsöffnung 15.2 und der mindestens einen zweiten Strömungsöffnung 15.3 ermöglicht ist. Dadurch wird ein bistabiles Magnetventil 10 umgesetzt, welches durch Anlegen eines Umschaltsignals zwischen den beiden Stellungen umgeschaltet werden kann, wobei das Magnetventil 10 dauerhaft bis zum nächsten Umschaltsignal im jeweiligen Betriebszustand verbleibt.

Ein solches bistabiles Magnetventil 10 kann beispielsweise in einem hydraulischen Bremssystem 1 für ein Fahrzeug eingesetzt werden.

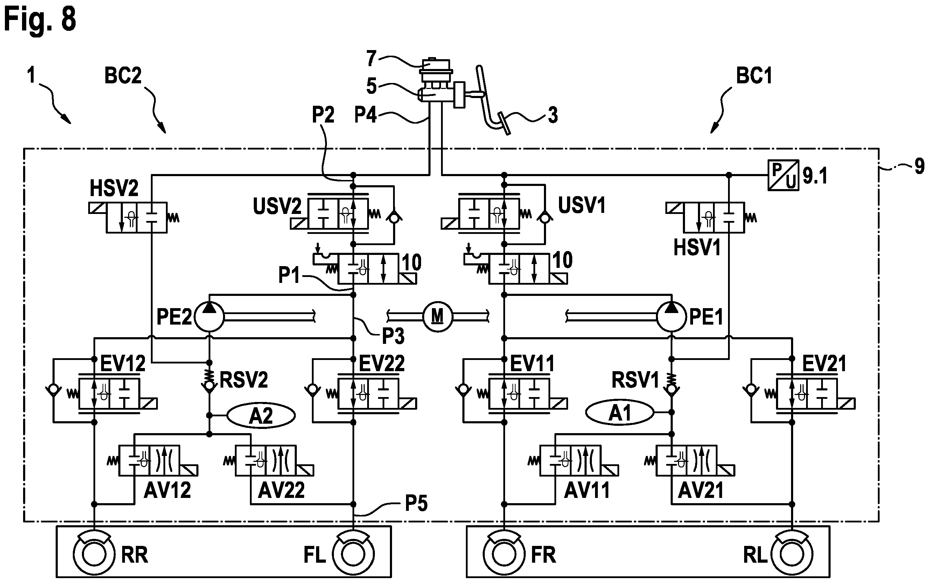

Wie aus Fig. 8 ersichtlich ist, umfasst das dargestellte Ausführungsbeispiel eines erfindungsgemäßen hydraulischen Bremssystems 1 für ein Fahrzeug, mit welchem verschiedene Sicherheitsfunktionen ausgeführt werden können, einen Hauptbremszylinder 5, eine Hydraulikeinheit 9 und mehrere Radbremsen RR, FL, FR, RL. Die Hydraulikeinheit 9 umfasst mindestens zwei Bremskreise BC1, BC2 zur Bremsdruckmodulation in den Radbremsen RR, FL, FR, RL. Hierbei weisen die mindestens zwei Bremskreise BC1, BC2 jeweils ein bistabiles Magnetventil 10, welches eine stromlose Geschlossenstellung und eine stromlose Offenstellung aufweist und zwischen den beiden Stellungen umschaltbar ist, wobei das bistabile Magnetventil 10 in der stromlosen Offenstellung die Bremsdruckmodulation in mindestens einer zugeordneten Radbremse RR, FL, FR, RL freigibt und in der stromlosen Geschlossenstellung einen aktuellen Bremsdruck in der mindestens einen zugeordneten Radbremse RR, FL, FR, RL einschließt.

Wie aus Fig. 8 weiter ersichtlich ist, umfasst das dargestellte Ausführungsbeispiel des hydraulischen Bremssystems 1 zwei Bremskreise BC1, BC2, welchen jeweils zwei der vier Radbremsen RR, FL, FR, RL zugeordnet sind. So sind eine erste Radbremse FR, welche beispielsweise an einer Fahrzeugvorderachse an der rechten Seite angeordnet ist, und eine zweite Radbremse RL, welche beispielsweise an einer Fahrzeughinterachse an der linken Seite angeordnet ist, einem ersten Bremskreis BC1 zugeordnet. Eine dritte Radbremse RR, welche beispielsweise an einer Fahrzeughinterachse an der rechten Seite angeordnet ist, und eine vierte Radbremse FL, welche beispielsweise an der Fahrzeugvorderachse an der linken Seite angeordnet ist, sind einem zweiten Bremskreis BC2 zugeordnet. Jeder Radbremse RR, FL, FR, RL ist ein Einlassventil EV11, EV21, EV12, EV22 und ein Auslassventil AV11, AV21, AV12, AV22 zugeordnet, wobei über die Einlassventile EV11, EV21, EV12, EV22 jeweils Druck in der korrespondierenden Radbremse RR, FL, FR, RL aufgebaut werden kann, und wobei über die Auslassventile AV11, AV21, AV12, AV22 jeweils Druck in der korrespondierenden Radbremse RR, FL, FR, RL abgebaut werden kann. Zum Druckaufbau in der jeweiligen Radbremse RR, FL, FR, RL wird das korrespondierende Einlassventil EV11, EV12, EV21, EV22 geöffnet und das korrespondierende Auslassventil AV11, AV12, AV21, AV22 geschlossen. Zum Druckabbau in der jeweiligen Radbremse RR, FL, FR, RL wird das korrespondierende Einlassventil EV11, EV21, EV12, EV22 geschlossen und das korrespondierende Auslassventil AV11, AV21, AV12, AV22 geöffnet.

Wie aus Fig. 8 weiter ersichtlich ist, sind der ersten Radbremse FR ein erstes Einlassventil EV11 und ein erstes Auslassventil AV11 zugeordnet, der zweiten Radbremse RL sind ein zweites Einlassventil EV21 und ein zweites Auslassventil AV21 zugeordnet, der dritten Radbremse RR sind ein drittes Einlassventil EV12 und ein drittes Auslassventil AV12 zugeordnet und der vierten Radbremse FL sind ein viertes Einlassventil EV22 und ein viertes Auslassventil AV22 zugeordnet. Über die Einlassventile EV11, EV21, EV12, EV22 und die Auslassventile AV11, AV21, AV12, AV22 können Steuer- und/oder Regelvorgänge zur Umsetzung einer ABS-Funktion durchgeführt werden.

Zudem weist der erste Bremskreis BC1 ein erstes Ansaugventil HSV1, ein erstes Systemdruckstellventil USV1, einen ersten Ausgleichsbehälter A1 mit einem ersten Rückschlagventil RSV1 und eine erste Fluidpumpe PE1 auf. Der zweite Bremskreis BC2 weist ein zweites Ansaugventil HSV2, ein zweites Systemdruckstellventil USV2, einen zweiten Ausgleichsbehälter A2 mit einem zweiten Rückschlagventil RSV2 und eine zweite Fluidpumpe PE2 auf, wobei die erste und zweite Fluidpumpe PE1, PE2 von einem gemeinsamen Elektromotor M angetrieben werden. Des Weiteren umfasst die Hydraulikeinheit 9 zur Ermittlung des aktuellen Systemdrucks bzw. Bremsdrucks eine Sensoreinheit 9.1. Die Hydraulikeinheit 9 verwendet zur Bremsdruckmodulation und zur Umsetzung einer ASR-Funktion und/oder einer ESP-Funktion im ersten Bremskreis BC1 das erste Systemdruckstellventil USV1, das erste Ansaugventil HSV1 und die erste Rückförderpumpe PE1 und im zweiten Bremskreis BC2 das zweite Systemdruckstellventil USV2, das zweite Ansaugventil HSV2 und die zweite Rückförderpumpe PE2. Wie aus Fig. 8 weiter ersichtlich ist, ist jeder Bremskreis BC1, BC2 mit dem Hauptbremszylinder 5 verbunden, welcher über ein Bremspedal 3 betätigt werden kann. Zudem ist Fluidbehälter 7 mit dem Hauptbremszylinder 5 verbunden. Die Ansaugventile HSV1, HSV2 ermöglicht einen Eingriff in das Bremssystem, ohne dass ein Fahrerwunsch vorliegt. Hierzu wird über die Ansaugventile HSV1, HSV2 der jeweilige Saugpfad für die korrespondierende Fluidpumpe PE1, PE2 zum Hauptbremszylinder 5 geöffnet, so dass diese anstelle des Fahrers den benötigten Druck für die Regelung bereitstellen kann. Die Systemdruckstellventile USV1, USV2 sind dem Hauptbremszylinder 5 und mindestens einer zugeordneten Radbremse RR, FL, FR, RL angeordnet und stellen den Systemdruck bzw. Bremsdruck im zugehörigen Bremskreis BC1, BC2 ein. Wie aus Fig. 8 weiter ersichtlich ist, stellt ein erstes Systemdruckstellventil USV1 den Systemdruck bzw. Bremsdruck im ersten Bremskreis BC1 ein und ein zweites Systemdruckstellventil USV2 stellt den Systemdruck bzw. Bremsdruck im zweiten Bremskreis BC2 ein.

Wie aus Fig. 8 weiter ersichtlich ist, können die bistabilen Magnetventile 10 an verschiedenen Positionen P1, P2, P3, P4, P5 in den jeweiligen Bremskreis BC1, BC2 eingeschleift werden. Bei den dargestellten Ausführungsbeispielen sind die verschiedenen Positionen P1, P2, P3, P4, P5 jeweils im zweiten Bremskreis BC2 bezeichnet. Wie aus Fig. 8 weiter ersichtlich ist, sind die bistabilen Magnetventile 10 jeweils an einer ersten Position P1 zwischen dem korrespondierenden Systemdruckstellventil USV1, USV2 und den Einlassventilen EV11, EV12, EV21, EV22 vor einem Auslasskanal der korrespondierenden Fluidpumpe PE1, PE2 in den jeweiligen Bremskreis BC1, BC2 eingeschleift. Alternativ können die bistabilen Magnetventile 10 jeweils an einer zweiten Position P2 zwischen dem Hauptbremszylinder 5 und dem korrespondierenden Systemdruckstellventil USV1, USV2 direkt vor dem korrespondierenden Systemdruckstellventil USV1, USV2 in den jeweiligen Bremskreis BC1, BC2 eingeschleift werden. Als weitere alternative Anordnung können die bistabilen Magnetventile 10 jeweils an einer dritten Position P3 zwischen dem korrespondierenden Systemdruckstellventil USV1, USV2 und den Einlassventilen EV11, EV12, EV21, EV22 nach dem Auslasskanal der Fluidpumpe PE1, PE2 in den jeweiligen Bremskreis BC1, BC2 eingeschleift werden. Zudem können die bistabilen Magnetventile 10 bei einer weiteren alternativen Anordnung jeweils an einer vierten Position P4 zwischen dem Hauptbremszylinder 5 und dem korrespondierenden Systemdruckstellventil USV1, USV2 im gemeinsamen Fluidzweig direkt nach dem Hauptbremszylinder 5 in den jeweiligen Bremskreis BC1, BC2 eingeschleift werden. Außerdem können die bistabilen Magnetventile 10 jeweils an einer fünften Position P5 direkt vor einer zugeordneten Radbremse RR, FL, FR, RL in den jeweiligen Bremskreis BC1, BC2 eingeschleift werden.

Wie aus Fig. 8 weiter ersichtlich ist, wird im dargestellten Ausführungsbeispiel des hydraulischen Bremssystems 1 ein elektrischer Energiespeicher in Form eines Fahrzeugbordnetzes verwendet, um den in der mindestens einen zugeordneten Radbremse RR, FL, FR, RL in der stromlosen Geschlossenstellung des bistabilen Magnetventils 10 eingeschlossenen Bremsdruck durch Nachfördern von Bremsfluid über die Fluidpumpe PE1, PE2 konstant zu halten. Da elektrische Energie nur zum Ventilschalten und für die kurze Nachförderfunktion erforderlich ist, ergibt sich nur ein geringer zusätzlicher elektrischer Energiebedarf für die Bremsdruckhaltefunktion. Alternativ können in einem nicht dargestellten Ausführungsbeispiel hydraulische Speichervorrichtungen verwendet werden, um den in der mindestens einen zugeordneten Radbremse RR, FL, FR, RL in der stromlosen Geschlossenstellung des bistabilen Magnetventils 10 eingeschlossenen Bremsdruck durch Nachfördern von Bremsfluid konstant zu halten. Da elektrische Energie nur zum Ventilschalten erforderlich ist, jedoch quasi keine elektrische Energie für die Nachförderfunktion erforderlich ist, ergibt sich durch die hydraulischen Speichervorrichtungen ein noch geringerer elektrischer Energiebedarf für die Bremsdruckhaltefunktion.

Durch die beschriebenen Maßnahmen ist in vorteilhafter Weise ein Ausgleich eventuell vorhandener interner Leckage und Volumenausdehnungen möglich, welche beispielsweise aufgrund von Temperaturgang auftreten können. Zudem können die beschriebenen Maßnahmen kombiniert werden. Das bedeutet, dass die hydraulische Speichervorrichtung mit der elektrischen Speichervorrichtung kombiniert werden kann, um in der stromlosen Geschlossenstellung des bistabilen Magnetventils 10 in der mindestens einen zugeordneten Radbremse RR, FL, FR, RL eingeschlossene Bremsdruck durch Nachförden von Bremsfluid über einen längeren Zeitraum konstant zu halten.

Wie aus Fig. 1 bis 7 weiter ersichtlich ist, ist die mechanische Rastvorrichtung 18 als Drehnockenmechanismus ausgeführt, welcher eine Umfangskraftkomponente nutzt, um den Stößel 40 mit dem Schließelement 46 axial in die Raststellung hinein und wieder heraus zu bewegen, so dass das Schließelement 46 durch Anlegen eines Umschaltsignals bzw. Stromimpulses an die Magnetbaugruppe zwischen den beiden stromlosen Stellungen wechseln kann.

Wie aus Fig. 1 bis 7 weiter ersichtlich ist, ist an einem dem Ventilsitz 15.1 zugewandten Ende eine Vertiefung 24 in einen Grundkörper 22 des Ventilankers 20 eingebracht, welche den Stößel 40 und einen Ankereinsatz 30 teilweise aufnimmt. Die erste Rückstellfeder 48 wirkt zwischen dem ortsfesten Führungsbauteil 50 und dem Stößel 40. Der Stößel 40 ist in einer ersten Durchgangsöffnung 53 des ortsfesten Führungsbauteils 50 und in einer zweiten Durchgangsöffnung 31 des Ankereinsatzes 30 radial geführt und kann vom Ventilanker 20 axial in Richtung Polkern 30 und von der ersten Rückstellfeder 48 in Richtung Ventilsitz 15.1 bewegt werden.

Wie aus Fig. 1 bis 7 weiter ersichtlich ist, weist der Stößel 40 einen zylindrischen Grundkörper 42 auf, an welchem eine erste Führungsgeometrie 43 und eine in Längsrichtung beabstandete zweite Führungsgeometrie 44 ausgebildet sind. Bei der axialen Bewegung des Stößels 40 wirkt die erste Führungsgeometrie 43 des Stößels 40 mit einer am Grundkörper 52 des Führungsbauteils 50 ausgebildeten dritten Führungsgeometrie 54 zusammen. Die zweite Führungsgeometrie 44 des Stößels 40 wirkt mit einer am Grundkörper 32 des Ankereinsatzes 30 ausgebildeten vierten Führungsgeometrie 36 zusammen. Die erste Rückstellfeder 48 ist als Spiralfeder ausgeführt und auf den Stößel 40 aufgeschoben. Im eingebauten Zustand stützt sich die erste Rückstellfeder 48 auf einer dem Ventilsitz 15.1 zugewandten Oberfläche des Führungsbauteils 50 und auf einem am Grundkörper 42 des Stößels 40 angeordneten umlaufenden Ringbund 45 ab. Alternativ kann die erste Rückstellfeder 48 in der Vertiefung 24 des Ankers 20 angeordnet werden und sich an einer Stirnfläche des Stößels 40 und am Boden der Vertiefung 24 abstützen.

Der Ventilanker 20 weist im dargestellten Ausführungsbeispiel einen zylindrischen Grundkörper 22 auf, welcher an einer Innenwand der Führungshülse 13 radial geführt ist. Ein zylindrischer Abschnitt 34 des Grundkörpers 32 des Ankereinsatzes 30 ist in einen korrespondierenden Abschnitt der Vertiefung 24 des Ventilankers 20 eingeführt und weist die vierte Führungsgeometrie 36 auf. Der Ankereinsatz 30 weist eine fünfte Führungsgeometrie 33 auf, welche bei einer axialen Bewegung des Ventilankers 20 mit einer sechsten Führungsgeometrie 56 des Grundkörpers 52 des ortsfesten Führungsbauteils 50 zusammenwirkt und den Ventilanker 20 axial führt. Aufgrund der Anforderung der magnetischen Leitfähigkeit sind der Ventilanker 20 und der Polkern 11 im dargestellten Ausführungsbeispiel aus magnetisch leitfähigem Metall im Kaltschlagverfahren oder spanend hergestellt.

Die fünfte Führungsgeometrie 33 weist im dargestellten Ausführungsbeispiel zwei Führungsschenkel 33.1 auf, welche einander gegenüberliegend an den zylindrischen Abschnitt 34 des Grundkörpers 32 angebunden sind. Die sechste Führungsgeometrie 56 umfasst mehrere Öffnungen 56.1 im Grundkörper 52 des ortsfesten Führungsbauteils 50, deren Abmessungen an die Abmessungen der Führungsschenkel 33.1 angepasst sind, wobei die beiden Führungsschenkel 33.1 jeweils in eine der Öffnungen 56.1 eingeführt und bei einer Axialbewegung des Ventilankers 20 axial in diesen geführt sind. Im dargestellten Ausführungsbeispiel ist der zylindrische Abschnitt 34 des Grundkörpers 32 des Ankereinsatzes 30 in den korrespondierenden Abschnitt der Vertiefung 24 des Ventilankers 20 eingepresst, so dass eine drehfeste Verbindung zwischen dem Ankereinsatz 30 und dem Ventilanker 20 gebildet wird. Im dargestellten Ausführungsbeispiel ist der Ankereinsatz 30 als Kunststoffspritzgussteil ausgeführt. Alternativ kann der Ankereinsatz 30 in einem PIM-, CIM- oder MIM-Verfahren oder als 3D-Druckteil hergestellt werden.

Wie aus Fig. 1 bis 7 weiter ersichtlich ist, umfasst die erste Führungsgeometrie 43 mehrere erste Ausformungen 43.1 in gleichmäßiger Teilung am Umfang des Grundkörpers 42 des Stößels 40, welche jeweils eine einseitige Abschrägung 43.2 aufweisen. Die dritte Führungsgeometrie 54 des ortsfesten Führungsbauteils 50 weist an einer Wandung der ersten Durchgangsöffnung 53 in gleichmäßiger Winkelteilung Axialnuten 54.1, 54.2 mit mindestens zwei unterschiedlichen Tiefen in radialer Richtung auf, wobei Zwischenstege 54.4 der Axialnuten 54.1, 54.2 einseitige Anschrägungen 54.5 aufweisen, welche an die einseitigen Abschrägungen 43.2 der ersten Ausformungen 43.1 des Stößels 40 angepasst sind. Aufgrund der komplexen Geometrie ist das Führungsbauteil 50 ebenfalls als Kunststoffspritzgussteil ausgeführt. Alternativ kann das Führungsbauteil 50 in einem PIM-, CIM- oder MIM-Verfahren oder als 3D-Druckteil hergestellt werden.

Die zweite Führungsgeometrie 44 umfasst an einem ersten Ende des Stößels 40 mehrere zweite Ausformungen 44.1, welche in gleichmäßiger Winkelteilung versetzt zu den ersten Ausformungen 43.1 am Umfang des Grundkörpers 42 des Stößels 40 angeordnet sind und jeweils eine einseitige Abschrägung 44.2 aufweisen. Bei der axialen Bewegung in Richtung Polkern 11 stützen sich die zweiten Ausformungen 44.1 auf der vierten Führungsgeometrie 36 des Ankereinsatzes 30 ab. Die vierte Führungsgeometrie 36 umfasst am Rand der zweiten Durchgangsöffnung 31 des Ankereinsatzes 30 in gleichmäßiger Winkelteilung eingebrachte Nuten 36.1 mit zweiseitigen Anschrägungen 36.2, welche an die einseitigen Abschrägungen 44.2 der zweiten Ausformungen 44.1 des Stößels 40 angepasst sind. Am anderen Ende des Stößels 40 ist das Schließelement 46 ausgebildet, welches die Spitze des Stößels 40 bildet und zur Ausübung der Dichtfunktion mit dem Ventilsitz 15.1 zusammenwirkt. Im dargestellten Ausführungsbeispiel ist der Stößel 40 als Kunststoffspritzgussteil ausgeführt. Alternativ kann der Stößel 40 in einem PIM-, CIM- oder MIM-Verfahren oder als 3D-Druckteil hergestellt werden. Zusätzlich ist am Schließelement 46 ein Dichtelement 47 angeordnet, um die Dichtwirkung im Ventilsitz 15.1 zu verbessern. Das Dichtelement ist im dargestellten Ausführungsbeispiel als O-Ring-Dichtung ausgeführt.

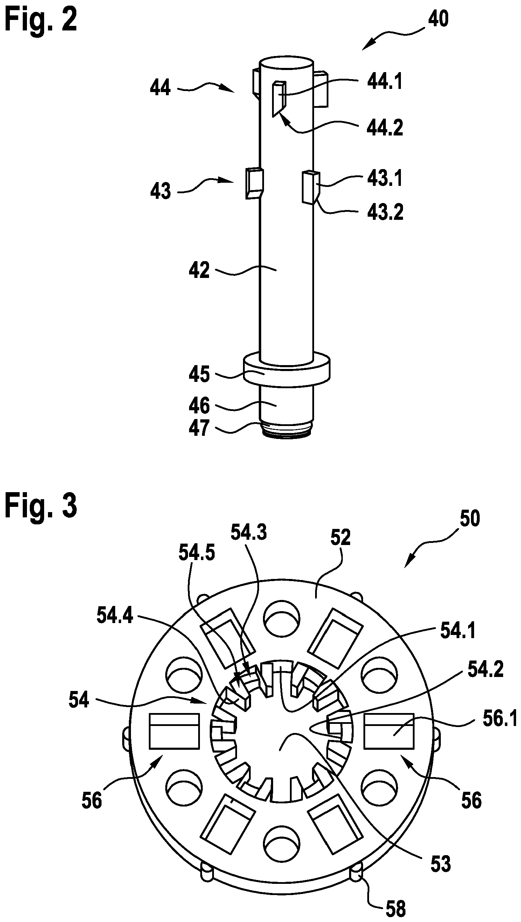

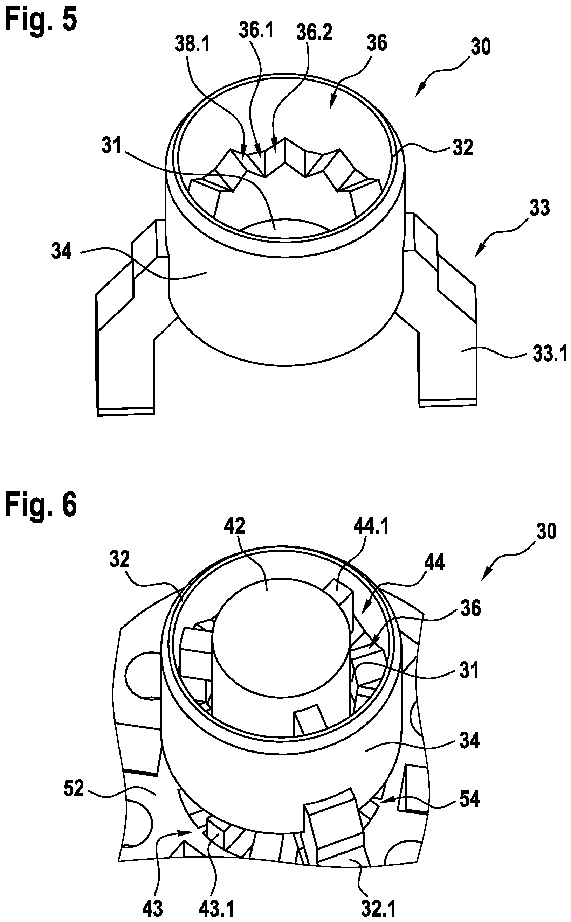

Wie insbesondere aus Fig. 2 weiter ersichtlich ist, sind am Grundkörper 42 des Stößels 40 im dargestellten Ausführungsbeispiel drei erste Ausformungen 43.1 mit einer 3 x 120° Winkelteilung ausgebildet. Zudem sind am ersten Ende des Grundkörpers 42 des Stößels 40 im dargestellten Ausführungsbeispiel drei zweite Ausformungen 44.1 mit einer 3 x 120° Winkelteilung ausgebildet, welche zu den ersten Ausformungen 43.1 jeweils um 60° versetzt sind. Wie insbesondere aus Fig. 3 weiter ersichtlich ist, sind im dargestellten Ausführungsbeispiel an der Wandung der ersten Durchgangsöffnung 53 sechs tiefe erste Axialnuten 54.1 mit einer Winkelteilung von 6 x 60° angeordnet, welche sich mit sechs flachen zweiten Axialnuten 54.2 mit einer Winkelteilung von 6 x 60° abwechseln. Wie aus Fig. 5 und 6 weiter ersichtlich ist, sind am Rand der zweiten Durchgangsöffnung 31 zwölf Nuten 36.1 mit zweiseitigen Anschrägungen 36.2 mit einer 12 x 30° Winkelteilung ausgebildet. Wie aus Fig. 6 weiter ersichtlich ist, liegen die einseitigen Abschrägungen 44.2 der zweiten Ausformungen 44.1 des Stößels jeweils an einer Anschrägung 36.2 von korrespondierenden Nuten 36.1 des Ankereinsatzes 30 an. Wie aus Fig. 3 weiter ersichtlich ist, sind im Grundkörper 52 des Führungsbauteils 50 sechs Öffnungen 56.1 mit einer Winkelteilung von 6 x 60° eingebracht, obwohl nur zwei Öffnungen 56.1 mit einer Winkelteilung von 2 x 180° zur axialen Führung der beiden Führungsschenkel 33.1 erforderlich sind. Zusammen mit weiten nicht näher bezeichneten Bohrungen ermöglicht dies eine optimierte Herstellbarkeit als Spritzteil mit ungefähr gleichen Wandstärken.

Wie aus Fig. 1 weiter ersichtlich ist, sind die ersten Ausformungen 43.1 des Stößel 10 in den tief ausgeführten ersten Axialnuten 54.1 im Grundkörper 52 des Führungsbauteils 50 geführt, so dass die erste Rückstellfeder 48 das Schließelement 46 über den Stößel 40 zur Ausführung einer Dichtfunktion dichtend in den Ventilsitz 15.1 drückt und eine Fluidströmung zwischen der mindestens einen ersten Strömungsöffnung 15.2 und der mindestens einen zweiten Strömungsöffnung 15.3 unterbricht. Wird der Ventilanker 20 aufgrund einer elektromagnetischen Wirkung axial zum unbeweglichen Polkern 11 hin angezogen, so nimmt der zum Ventilanker 20 unbeweglich angeordnete Ankereinsatz 30 mit seinen Nuten 36.1 den Stößel 40 über dessen zweite Ausformungen 44.1 mit. Durch die Anschrägungen 36.2 an den Nuten 36.1 des Ankereinsatzes 30 und die Abschrägungen 44.2 an den zweiten Ausformungen 44.1 des Stößels 40 wird auf den Stößel 40 bei dieser Hubbewegung eine Umfangskraft ausgeübt, welche den Stößel 40 um seine Längsachse zu drehen versucht. Diese Drehbewegung wird jedoch zunächst durch die Führung der ersten Ausformungen 43.1 des Stößels in den tiefen ersten Axialnuten 54.1 des Führungsbauteils 50 verhindert, welche zunächst nur eine rein axiale Bewegung des Stößels 40 zulassen. Die Drehbewegung wird auch durch die axiale Führung zwischen dem Ankereinsatz 30 und dem Führungsbauteil 50 verhindert. Erst bei Überschreiten eines bestimmten Axialhubs des Stößels 40 wird die Radialführung der ersten Ausformungen 43.1 des Stößels 40 in den ersten Axialnuten 54.1 des Führungsbauteils 50 überschritten und die zweiten Ausformungen 43.1 des Stößels 40 rutschen aufgrund der immer noch wirkenden Umfangskraft axial noch etwas tiefer in die Nuten 36.1 des Ankereinsatzes 30 (Spitze in Spitze). Der Stößel 40 wird dadurch an einer weiteren Rotation gehindert. Wird der Axialhub von Ventilanker 20, Ankereinsatz 30 und Stößel 40 anschließend reduziert, finden die ersten Ausformungen 43.1 des Stößels 40 mit ihren Abschrägungen 43.2 aufgrund der an den Zwischenstegen 54.4 der Axialnuten 54.1, 54.2 ausgebildeten einseitigen Anschrägungen 54.5 in die jeweils nächste Axialnut 54.2 des Führungsbauteils 50 und folgen dieser neuen Führung durch eine Rotationsbewegung. Dabei rutschen auch die zweiten Ausformungen 44.1 des Stößels 40 jeweils in die nächste Nut 36.1 des Ankereinsatzes 30. Die Axialnuten 54.1, 54.2 des Führungsbauteils 50 sind in ihrer radialen Ausbreitung unterschiedlich geformt. Das bedeutet, dass jede zweite Axialnut 54.2 radial flacher als ihre Nachbarnut 54.1 ausgeführt ist. Rutschen nun die ersten Ausformungen 43.1 des Stößels 40, wie oben beschrieben ist, in eine flachere zweite Axialnut 54.2 des Führungsbauteils 50, so kann der Stößel 40 dem sich verkleinernden Ankerhub nicht mehr folgen, sondern bleibt in der axialen Raststellung eingerastet, welche durch an den Rändern der zweiten Axialnuten 54.2 ausgebildete Anschrägungen 54.3 vorgegeben ist, welche an die Abschrägungen 43.2 der ersten Ausformungen 43.1 angepasst sind. Dadurch erfolgt eine eindeutige Spitze-Spitze-Positionierung, welche durch die immer noch schließend wirkende erste Rückstellfeder 48 gesichert wird. Bei der nächsten Ventilbetätigung bewegt sich der Ventilanker 20 mit Ankereinsatz 30 wieder axial in Richtung Polkern 11 und nimmt nach Berührung der Anschrägungen 36.2 an den Nuten 36.1 des Ankereinsatzes 30 mit den zweiten Ausformungen 44.1 des Stößels 40 den Stößel 40 mit. Wie oben beschrieben, kann sich der Stößel 40 bis zum Erreichen des bestimmten Axialhubs nicht drehen. Mit Erreichen des bestimmten Axialhubs dreht sich der Stößel 40 und die zweiten Ausformungen 44.1 des Stößels 40 rutschen tiefer in die Nuten 36.1 des Ankereinsatzes 30 (Spitze in Spitze). Der Stößel 40 wird dadurch an einer weiteren Rotation gehindert. Wird der Axialhub von Ventilanker 20, Ankereinsatz 30 und Stößel 40 anschließend reduziert, finden die ersten Ausformungen 43.1 des Stößels 40 mit ihren Abschrägungen 43.2 in die jeweils nächste Axialnut 54.1 des Führungsbauteils 50 und folgen dieser neuen Führung durch eine Rotationsbewegung. Dabei rutschen auch die zweiten Ausformungen 44.1 des Stößels 40 jeweils in die nächste Nut 36.1 des Ankereinsatzes 30. Da die Axialnuten 54.1, 54.2 des Führungsbauteils 50 sind in ihrer radialen Ausbreitung unterschiedlich geformt sind, rutschen nun die ersten Ausformungen 43.1 des Stößels 40 jeweils in eine tiefere erste Axialnut 54.1 des Führungsbauteils 50, so kann der Stößel 40 dem sich verkleinernden Ankerhub ohne Begrenzung folgen, bis der Stößel 40 bzw. das Schließelement 46 in der Geschlossenstellung im Ventilsitz 15.1 ankommt.

Wie aus Fig. 7 weiter ersichtlich ist, sind in der stromlosen Offenstellung die ersten Ausformungen 43.1 des Stößels 40 jeweils in einer in radialer Richtung flacheren Axialnut 54.2 axial gehalten. Hierbei liegen die Abschrägungen 43.2 der ersten Ausformungen 43.1 an Anschrägungen 54.3 an, welche am Rand der flacheren Axialnuten 54.2 ausgebildet sind.

Wie aus Fig. 1 und 7 weiter ersichtlich ist, ist im dargestellten Ausführungsbeispiel des Magnetventils 10 zwischen dem Ventilanker 20 und dem Polkern 30 eine zweite Rückstellfeder 16 angeordnet, welche den Ventilanker 20 in Richtung Ventilsitz 15.1 bewegt. Diese zusätzliche schließend wirkende Rückstellfeder 16 ist vorzugsweise als sehr federweiche Druckfeder ausgeführt und verhindert eine undefinierte Lage des Ventilankers 20. Im dargestellten Ausführungsbeispiel ist in den Grundkörper 22 des Ventilankers 20 eine Sacklochbohrung als Federaufnahme 21 eingebracht, welche die zweite Rückstellfeder 16 zumindest teilweise aufnimmt. Alternativ kann diese Sacklochbohrung zur Aufnahme der zweiten Rückstellfeder 16 in den Polkern 11 eingebracht werden.

Die oben genannten Anzahlen und Winkelteilungen der verschiedenen Ausformungen 43.1, 44.1 Führungsschenkel 33.1, oder und Nuten 36.1, 54.1, 54.2 sowie die jeweiligen Schrägungswinkel können entsprechend verändert und an die Dimensionen des Magnetventils 10 angepasst werden, um mit einem üblichen magnetischen axialen Luftspalt die verschiedenen Hubstellungen bei sinnvoll vorhandener Magnetkraft anfahren zu können.

Zur Erleichterung der Montage kann der Stößel 40 mehrteilig ausgeführt werden. Die Teilung erfolgt vorzugsweise zwischen den ersten und zweiten Ausformungen 43.1, 44.1. Die Stößelteile werden einzeln montiert und dann beispielsweise durch eine Stift-Bohrung-Pressverbindung zusammengefügt. Dadurch ergibt sich eine uneingeschränkte Aushebefunktion des Ankereinsatzes 30 für den Stößel 40 an jeder Drehwinkelposition. Alternativ kann der Stößel 40 einteilig mit seinen Ausformungen ausgeführt werden und von unten durch neue, durchgehende Axialnuten im Ankereinsatz 30 in den Ankereinsatz 30 gefügt werden, vergleichbar mit den tiefen ersten Axialnuten 54.1 des Führungsbauteils 50. Zudem kann der Stößel 40 mit seinen Ausformungen 43.1, 44.1 und einem im Durchmesser verringerten Ringbund 45 von oben durch den Ankereinsatz 30 eingeführt werden. Es werden neue durchgehende Nuten im Ankereinsatz vorgesehen, welche auf die Winkelteilung der ersten Ausformungen 43.1 passen. Diese Winkelteilung unterscheidet sich von der Winkelteilung der zweiten Ausformungen 43.2. Zusätzlich oder alternativ können die zweiten Ausformungen 44.1 beispielsweise dicker oder mit größere Anzahl im Vergleich zu den ersten Ausformungen 43.1 ausgeführt werden, so dass kein unerwünschtes Durchtauchen durch die neuen durchgehenden Axialnuten des Ankereinsatzes 30 erfolgen kann.

Zudem kann der Ankereinsatz 30 mehrteilig ausgeführt werden. So kann der Ankereinsatz 30 beispielsweise zwei Ringhälften aufweisen, welche vor dem Einführen in die Vertiefung 24 des Ventilankers 20 um den Stößel 40 herumgelegt werden und sich leicht überdecken können. Die Ankereinsatzhälften umschließen den Stößel 40 vorzugsweise zwischen seinen ersten und zweiten Ausformungen 43.1, 44.1. Alternativ können die Ringhälften beispielsweise durch ein stark verformbares einteilig angeformtes Filmscharnier verbunden werden, welches zur Aufnahme des Stößels 40 so weit wie nötig geöffnet wird.

## Patentansprüche

1. Magnetventil (10) für ein hydraulisches Bremssystem (1), mit einer Magnetbaugruppe, einem Polkern (11), einer mit dem Polkern (11) verbundene Führungshülse (13), einem innerhalb der Führungshülse (13) axial beweglich geführten Ventilanker (20), welcher von einer durch die Magnetbaugruppe erzeugten Magnetkraft gegen die Kraft mindestens einer Rückstellfeder (16, 48) oder durch die Kraft der mindestens einen Rückstellfeder (16, 48) antreibbar ist und einen Stößel (40) mit einem Schließelement (46) axial bewegt, und einem mit der Führungshülse (13) verbundenen Ventilkörper (15) mit einem Ventilsitz (15.1), welcher zwischen mindestens einer ersten Strömungsöffnung (15.2) und mindestens einer zweiten Strömungsöffnung (15.3) angeordnet ist, **dadurch gekennzeichnet, dass** der Stößel (40) axial beweglich im Ventilanker (20) gelagert ist, wobei zwischen einem ortsfesten Führungsbauteil (50), welches in die Führungshülse (13) eingeführt ist, und dem Stößel (40) eine mechanische Rastvorrichtung (18) ausgebildet ist, welche den Stößel (40) in einer stromlosen Geschlossenstellung freigibt, so dass eine erste Rückstellfeder (48) das Schließelement (46) zur Ausführung einer Dichtfunktion dichtend in den Ventilsitz (15.1) drückt, und den Stößel (40) in einer stromlosen Offenstellung gegen die Kraft der ersten Rückstellfeder (48) in einer axialen Raststellung so festlegt, dass das Schließelement (46) vom Ventilsitz (15.1) abgehoben ist.

2. Magnetventil nach Anspruch 1, **dadurch gekennzeichnet, dass** die mechanische Rastvorrichtung (18) als Drehnockenmechanismus ausgeführt ist, welcher eine Umfangskraftkomponente nutzt, um den Stößel (40) mit dem Schließelement (46) axial in die Raststellung hinein und wieder heraus zu bewegen, so dass das Schließelement (46) durch Anlegen eines Umschaltsignals an die Magnetbaugruppe zwischen den beiden stromlosen Stellungen wechselt.

3. Magnetventil nach Anspruch 2, **dadurch gekennzeichnet, dass** an einem dem Ventilsitz (15.1) zugewandten Ende eine Vertiefung (24) in einen Grundkörper (22) des Ventilankers (20) eingebracht ist, welche den Stößel (40) und einen Ankereinsatz (30) teilweise aufnimmt, wobei die erste Rückstellfeder (48) zwischen dem ortsfesten Führungsbauteil (50) und dem Stößel (40) wirkt, und wobei der Stößel (40) in einer ersten Durchgangsöffnung (53) des ortsfesten Führungsbauteils (50) und in einer zweiten Durchgangsöffnung (31) des Ankereinsatzes (30) radial geführt ist und vom Ventilanker (20) axial in Richtung Polkern (30) und von der ersten Rückstellfeder (48) in Richtung Ventilsitz (15.1) bewegbar ist.

4. Magnetventil nach Anspruch 3, **dadurch gekennzeichnet, dass** der Stößel (40) einen zylindrischen Grundkörper (42) aufweist, an welchem eine erste Führungsgeometrie (43) und eine in Längsrichtung beabstandete zweite Führungsgeometrie (44) ausgebildet sind, wobei bei der axialen Bewegung des Stößels (40) die erste Führungsgeometrie (43) des Stößels (40) mit einer am Grundkörper (52) des Führungsbauteils (50) ausgebildeten dritten Führungsgeometrie (54) zusammenwirkt, und die zweite Führungsgeometrie (44) des Stößels (40) mit einer am Grundkörper (32) des Ankereinsatzes (30) ausgebildeten vierten Führungsgeometrie (36) zusammenwirkt.

5. Magnetventil nach Anspruch 3 oder 4, **dadurch gekennzeichnet, dass** der Ventilanker (20) einen zylindrischen Grundkörper (22) aufweist, welcher an einer Innenwand der Führungshülse (13) radial geführt ist, wobei ein zylindrischer Abschnitt (34) des Grundkörpers (32) des Ankereinsatzes (30) in einen korrespondierenden Abschnitt der Vertiefung (24) des Ventilankers (20) eingeführt ist und die vierte Führungsgeometrie (36) aufweist, und wobei der Ankereinsatz (30) eine fünfte Führungsgeometrie (33) aufweist, welche bei einer axialen Bewegung des Ventilankers (20) mit einer sechsten Führungsgeometrie (56) des Grundkörpers (52) des ortsfesten Führungsbauteils (50) zusammenwirkt und den Ventilanker (20) axial führt.

6. Magnetventil nach Anspruch 5, **dadurch gekennzeichnet, dass** die fünfte Führungsgeometrie (33) mindestens zwei Führungsschenkel (33.1) aufweist, welche an den zylindrischen Abschnitt (34) des Grundkörper (32) angebunden sind, wobei die sechste Führungsgeometrie (56) mindestens zwei Öffnungen (56.1) im Grundkörper (52) des ortsfesten Führungsbauteils (50) umfasst, deren Abmessungen an die Abmessungen der Führungsschenkel (33.1) angepasst sind, wobei die mindestens zwei Führungsschenkel (33.1) jeweils in eine der Öffnungen (56.1) eingeführt und bei einer Axialbewegung des Ventilankers (20) axial in diesen geführt sind.

7. Magnetventil nach einem der Ansprüche 4 bis 6, **dadurch gekennzeichnet, dass** die erste Führungsgeometrie (43) mehrere erste Ausformungen (43.1) in gleichmäßiger Teilung am Umfang des Grundkörpers (42) des Stößels (40) umfasst, welche jeweils eine einseitige Abschrägung (43.2) aufweisen, wobei die dritte Führungsgeometrie (54) des ortsfesten Führungsbauteils (50) an einer Wandung der ersten Durchgangsöffnung (53) in gleichmäßiger Winkelteilung Axialnuten (54.1, 54.2) mit mindestens zwei unterschiedlichen Tiefen in radialer Richtung aufweist, wobei Zwischenstege (54.4) der Axialnuten (54.1, 54.2) einseitige Anschrägungen (54.5) aufweisen, welche an die einseitigen Abschrägungen (43.2) der ersten Ausformungen (43.1) des Stößels (40) angepasst sind.

8. Magnetventil nach Anspruch 7, **dadurch gekennzeichnet, dass** die zweite Führungsgeometrie (44) an einem ersten Ende des Stößels (40) mehrere zweite Ausformungen (44.1) umfasst, welche in gleichmäßiger Teilung versetzt zu den ersten Ausformungen (43.1) am Umfang des Grundkörpers (42) des Stößels (40) angeordnet sind und jeweils eine einseitige Abschrägung (44.2) aufweisen und sich bei der axialen Bewegung in Richtung Polkern (11) auf der vierten Führungsgeometrie (36) des Ankereinsatzes (30) abstützen, welche am Rand der zweiten Durchgangsöffnung (31) des Ankereinsatzes (30) in gleichmäßiger Winkelteilung eingebrachte Nuten (36.1) mit zweiseitigen Anschrägungen (36.2) umfasst, welche an die einseitigen Abschrägungen (44.2) der zweiten Ausformungen (44.1) des Stößels (40) angepasst sind.

9. Magnetventil nach Anspruch 8, **dadurch gekennzeichnet, dass** der Ventilanker (20) bei einer durch Magnetkraft der Magnetbaugruppe bewirkten Axialbewegung in Richtung Polkern (11) den eingeführten Ankereinsatz (30) und mit den Nuten (36.1) des Ankereinsatzes (30) den Stößel (40) über seine zweiten Ausformungen (44.1) mitnimmt, wobei durch die Anschrägungen (36.2) der Nuten (36.1) und die Abschrägungen (44.2) der zweiten Ausformungen (44.1) des Stößels (40) während der Axialbewegung in Richtung Polkern (11) eine Umfangskraft auf den Stößel (40) wirkt, welche versucht den Stößel (40) um seine Längsachse zu drehen, wobei die gleichzeitige Führung der ersten Ausformungen (43.1) des Stößels (40) in den Axialnuten (54.1, 54.2) des ortsfesten Führungsbauteils (50) und/oder der Führungsschenkel (33.1) des Ankereinsatzes (30) in den Öffnungen (56.1) des ortsfesten Führungsbauteils (50) diese Drehbewegung solange verhindert, bis der Stößel (40) einen vorgegebenen Axialhub erreicht und die ersten Ausformungen (43.1) des Stößels (40) die Axialnuten (54.1, 54.2) des ortsfesten Führungsbauteils (50) verlassen und aufgrund der immer noch wirkenden Umfangskraft tiefer in die Nuten (36.1) rutschen, wobei die zweiten Ausformungen (44.1) des Stößels (40) aufgrund der an den Zwischenstegen (54.4) der Axialnuten (54.1, 54.2) ausgebildeten einseitigen Anschrägungen (54.5) in die nächsten Axialnuten (54.1, 54.2) des ortsfesten Führungsbauteils (50) rutschen und der neuen Führung durch eine Radialbewegung folgen, wenn sich der Axialhub des Ventilankers (20) und des Stößels (40) aufgrund der wirkenden Federkraft der ersten Rückstellfeder (48) reduziert, wobei die zweiten Ausformungen (44.1) des Stößels (40) gleichzeitig in die jeweils nächste Nut (36.1) rutschen.

10. Magnetventil nach Anspruch 9, **dadurch gekennzeichnet, dass** in der stromlosen Offenstellung mindestens zwei erste Ausformungen (43.1) des Stößels (40) jeweils in einer in radialer Richtung flacheren Axialnut (54.2) axial gehalten sind, wobei die Abschrägungen (43.2) der ersten Ausformungen (43.1) an Anschrägungen (54.3) anliegen, welche am Rand der flacheren Axialnuten (54.2) ausgebildet sind, und wobei in der stromlosen Geschlossenstellung alle ersten Ausformungen (43.1) des Stößels (40) jeweils in einer in radialer Richtung tieferen Axialnut (54.1) bis zum Anschlag des Schließelements (46) im Ventilsitz (15.1) geführt sind.

11. Magnetventil nach einem der Ansprüche 1 bis 10, **dadurch gekennzeichnet, dass** zwischen dem Ventilanker (20) und dem Polkern (30) eine zweite Rückstellfeder (16) angeordnet ist, welche den Ventilanker (20) in Richtung Ventilsitz (15.1) bewegt.

12. Magnetventil nach Anspruch 11, **dadurch gekennzeichnet, dass** in den Grundkörper (22) des Ventilankers (20) eine Federaufnahme (21) eingebracht ist, welche die zweite Rückstellfeder (16) zumindest teilweise aufnimmt.

13. Magnetventil nach einem der Ansprüche 4 bis 12, **dadurch gekennzeichnet, dass** der Stößel (40) mehrteilig ausgeführt ist, wobei der Grundkörper (42) des Stößels (40) zwischen der ersten und zweiten Führungsgeometrie (43, 44) gefügt ist.

14. Magnetventil nach einem der Ansprüche 5 bis 13, **dadurch gekennzeichnet, dass** der Ankereinsatz (30) mehrteilig ausgeführt ist.

15. Hydraulisches Bremssystem (1) für ein Fahrzeug, mit einem Hauptbremszylinder (5), einer Hydraulikeinheit (9) und mehreren Radbremsen (RR, FL, FR, RL), wobei die Hydraulikeinheit (9) mindestens zwei Bremskreise (BC1, BC2) zur Bremsdruckmodulation in den Radbremsen (RR, FL, FR, RL) umfasst, **dadurch gekennzeichnet, dass** die mindestens zwei Bremskreise (BC1, BC2) jeweils mindestens ein bistabiles Magnetventil (10) aufweisen, welches nach zumindest einem der Ansprüche 1 bis 14 ausgeführt ist und in der stromlosen Offenstellung die Bremsdruckmodulation in mindestens einer zugeordneten Radbremse (RR, FL, FR, RL) freigibt und in der stromlosen Geschlossenstellung einen aktuellen Bremsdruck in der mindestens einen zugeordneten Radbremse (RR, FL, FR, RL) einschließt.

## Claims

1. Solenoid valve (10) for a hydraulic brake system (1), having a solenoid assembly, having a pole core (11), having a guide sleeve (13) connected to the pole core (11), having a valve armature (20) which is guided in axially movable fashion within the guide sleeve (13) and which can be driven counter to the force of at least one resetting spring (16, 48) by a magnet force generated by the solenoid assembly or can be driven by the force of the at least one resetting spring (16, 48) and which axially moves a plunger (40) with a closing element (46), and having a valve body (15) which is connected to the guide sleeve (13) and which has a valve seat (15.1) which is arranged between at least one first flow opening (15.2) and at least one second flow opening (15.3), **characterized in that** the plunger (40) is mounted in axially movable fashion in the valve armature (20), wherein a mechanical detent device (18) is formed between a positionally fixed guide component (50) which is inserted into the guide sleeve (13), and the plunger (40), which mechanical detent device, in an electrically deenergized closed position, releases the plunger (40) such that a first resetting spring (48) pushes the closing element (46) sealingly into the valve seat (15.1) in order to perform a sealing function, and, in an electrically deenergized open position, fixes the plunger (40), counter to the force of the first resetting spring (48), in an axial detent position such that the closing element (46) is lifted off from the valve seat (15.1).

2. Solenoid valve according to Claim 1, **characterized in that** the mechanical detent device (18) is designed as a rotary cam mechanism which utilizes a circumferential force component in order to move the plunger (40) with the closing element (46) axially into the detent position and out of said detent position again, such that the closing element (46) switches between the two electrically deenergized positions as a result of application of a switching signal to the solenoid assembly.

3. Solenoid valve according to Claim 2, **characterized in that**, at an end facing toward the valve seat (15.1), a depression (24) is formed into a main body (22) of the valve armature (20), which depression partially receives the plunger (40) and an armature insert (30), wherein the first resetting spring (48) acts between the positionally fixed guide component (50) and the plunger (40), and wherein the plunger (40) is guided radially in a first passage opening (53) of the positionally fixed guide component (50) and in a second passage opening (31) of the armature insert (30) and is movable by the valve armature (20) axially in the direction of the pole core (30) and by the first resetting spring (48) in the direction of the valve seat (15.1).

4. Solenoid valve according to Claim 3, **characterized in that** the plunger (40) has a cylindrical main body (42) on which a first guide geometry (43) and a second guide geometry (44) spaced apart in a longitudinal direction are formed, wherein, during the axial movement of the plunger (40), the first guide geometry (43) of the plunger (40) interacts with a third guide geometry (54) formed on the main body (52) of the guide component (50), and the second guide geometry (44) of the plunger (40) interacts with a fourth guide geometry (36) formed on the main body (32) of the armature insert (30).

5. Solenoid valve according to Claim 3 or 4, **characterized in that** the valve armature (20) has a cylindrical main body (22) which is guided radially on an inner wall of the guide sleeve (13), wherein a cylindrical portion (34) of the main body (32) of the armature insert (30) is inserted into a corresponding portion of the depression (24) of the valve armature (20) and has the fourth guide geometry (36), and wherein the armature insert (30) has a fifth guide geometry (33) which, during an axial movement of the valve armature (20), interacts with a sixth guide geometry (56) of the main body (52) of the positionally fixed guide component (50) and axially guides the valve armature (20).

6. Solenoid valve according to Claim 5, **characterized in that** the fifth guide geometry (33) has at least two guide limbs (33.1) which are attached to the cylindrical portion (34) of the main body (32), wherein the sixth guide geometry (56) comprises at least two openings (56.1) in the main body (52) of the positionally fixed guide component (50), the dimensions of which openings are adapted to the dimensions of the guide limbs (33.1), wherein the at least two guide limbs (33.1) are inserted into in each case one of the openings (56.1) and are guided axially therein during an axial movement of the valve armature (20) .

7. Solenoid valve according to any of Claims 4 to 6, **characterized in that** the first guide geometry (43) comprises multiple first protuberances (43.1) with a uniform pitch on the circumference of the main body (42) of the plunger (40), which protuberances each have a unilateral bevel (43.2), wherein the third guide geometry (54) of the positionally fixed guide component (50) has, on a wall of the first passage opening (53), axial grooves (54.1, 54.2) with a uniform angular pitch and with at least two different depths in a radial direction, wherein intermediate webs (54.4) of the axial grooves (54.1, 54.2) have unilateral bevels (54.5), which bevels are adapted to the unilateral bevels (43.2) of the first protuberances (43.1) of the plunger (40).

8. Solenoid valve according to Claim 7, **characterized in that** the second guide geometry (44) comprises multiple second protuberances (44.1) on a first end of the plunger (40), which second protuberances are arranged with a uniform pitch, and so as to be offset with respect to the first protuberances (43.1), on the circumference of the main body (42) of the plunger (40) and each have a unilateral bevel (44.2) and are supported on the fourth guide geometry (36) of the armature insert (30) during the axial movement in the direction of the pole core (11), which fourth guide geometry comprises, on the edge of the second passage opening (31) of the armature insert (30), grooves (36.1) which are formed with a uniform angular pitch and which have bilateral bevels (36.2), which bevels are adapted to the unilateral bevels (44.2) of the second protuberances (44.1) of the plunger (40).

9. Solenoid valve according to Claim 8, **characterized in that**, during an axial movement, effected by magnetic force of the solenoid assembly, in the direction of the pole core (11), the valve armature (20) drives along the inserted armature insert (30) and, by means of the grooves (36.1) of the armature insert (30), the plunger (40) by way of its second protuberances (44.1), wherein, during the axial movement in the direction of the pole core (11), a circumferential force acts on the plunger (40) by means of the bevels (36.2) of the grooves (36.1) and the bevels (44.2) of the second protuberances (44.1) of the plunger (40), which circumferential force seeks to rotate the plunger (40) about its longitudinal axis, wherein the simultaneous guidance of the first protuberances (43.1) of the plunger (40) in the axial grooves (54.1, 54.2) of the positionally fixed guide component (50) and/or of the guide limbs (33.1) of the armature insert (30) in the openings (56.1) of the positionally fixed guide component (50) prevents said rotational movement until the plunger (40) reaches a predefined axial stroke and the first protuberances (43.1) of the plunger (40) exit the axial grooves (54.1, 54.2) of the positionally fixed guide component (50) and, owing to the circumferential force that continues to act, slide deeper into the grooves (36.1), wherein, owing to the unilateral bevels (54.5) formed on the intermediate webs (54.4) of the axial grooves (54.1, 54.2), the second protuberances (44.1) of the plunger (40) slide into the next axial grooves (54.1, 54.2) of the positionally fixed guide component (50) and follow the new guide by means of a radial movement if the axial stroke of the valve armature (20) and of the plunger (40) reduces owing to the acting spring force of the first resetting spring (48), wherein the second protuberances (44.1) of the plunger (40) simultaneously slide into the respectively next groove (36.1) .

10. Solenoid valve according to Claim 9, **characterized in that**, in the electrically deenergized open position, at least two first protuberances (43.1) of the plunger (40) are in each case held axially in an axial groove (54.2) which is relatively shallow in a radial direction, wherein the bevels (43.2) of the first protuberances (43.1) bear against bevels (54.3) which are formed on the edge of the relatively shallow axial grooves (54.2), and wherein, in the electrically deenergized closed position, all of the first protuberances (43.1) of the plunger (40) are guided in each case in an axial groove (54.1), which is relatively deep in a radial direction, until the closing element (46) makes contact in the valve seat (15.1).

11. Solenoid valve according to any of Claims 1 to 10, **characterized in that**, between the valve armature (20) and the pole core (30), there is arranged a second resetting spring (16) which moves the valve armature (20) in the direction of the valve seat (15.1).

12. Solenoid valve according to Claim 11, **characterized in that**, into the main body (22) of the valve armature (20), there is formed a spring receptacle (21) which at least partially receives the second resetting spring (16).

13. Solenoid valve according to any of Claims 4 to 12, **characterized in that** the plunger (40) is of multi-part design, wherein the main body (42) of the plunger (40) is joined between the first and second guide geometry (43, 44).

14. Solenoid valve according to any of Claims 5 to 13, **characterized in that** the armature insert (30) is of multi-part design.

15. Hydraulic brake system (1) for a vehicle, having a master brake cylinder (5), having a hydraulics unit (9) and having multiple wheel brakes (RR, FL, FR, RL), wherein the hydraulics unit (9) comprises at least two brake circuits (BC1, BC2) for brake pressure modulation in the wheel brakes (RR, FL, FR, RL), **characterized in that** the at least two brake circuits (BC1, BC2) each have at least one bistable solenoid valve (10) which is designed according to at least one of Claims 1 to 14 and which, in the electrically deenergized open position, enables the brake pressure modulation in at least one associated wheel brake (RR, FL, FR, RL) and, in the electrically deenergized closed position, encloses a present brake pressure in the at least one associated wheel brake (RR, FL, FR, RL).

## Revendications

1. Soupape électromagnétique (10) pour un système de freinage hydraulique (1), comprenant un module magnétique, un noyau polaire (11), une douille de guidage (13) connectée au noyau polaire (11), un induit de soupape (20) guidé de manière déplaçable axialement à l'intérieur de la douille de guidage (13), qui peut être entraîné par une force magnétique générée par le module magnétique à l'encontre de la force d'au moins un ressort de rappel (16, 48), ou par la force de l'au moins un ressort de rappel (16, 48), et qui déplace axialement un poussoir (40) avec un élément de fermeture (46), et un corps de soupape (15) connecté à la douille de guidage (13) avec un siège de soupape (15.1), lequel est disposé entre au moins une première ouverture d'écoulement (15.2) et au moins une deuxième ouverture d'écoulement (15.3), **caractérisée en ce que** le poussoir (40) est supporté de manière déplaçable axialement dans l'induit de soupape (20), un dispositif d'encliquetage mécanique (18) étant réalisé entre un composant de guidage fixe (50), qui est introduit dans la douille de guidage (13), et le poussoir (40), lequel dispositif d'encliquetage mécanique libère le poussoir (40) dans une position fermée non alimentée en courant, de telle sorte qu'un premier ressort de rappel (48) presse l'élément de fermeture (46) hermétiquement dans le siège de soupape (15.1) pour réaliser une fonction d'étanchéité, et fixe le poussoir (40) dans une position ouverte non alimentée en courant à l'encontre de la force du premier ressort de rappel (48) dans une position d'encliquetage axiale de telle sorte que l'élément de fermeture (46) soit soulevé du siège de soupape (15.1).

2. Soupape électromagnétique selon la revendication 1, **caractérisée en ce que** le dispositif d'encliquetage mécanique (18) est réalisé sous forme de mécanisme à came rotative qui utilise une composante de force périphérique pour déplacer le poussoir (40) avec l'élément de fermeture (46) axialement dans la position d'encliquetage et à nouveau hors de celle-ci, de telle sorte que l'élément de fermeture (46) alterne entre les deux positions non alimentées en courant par application d'un signal de commutation au niveau du module magnétique.

3. Soupape électromagnétique selon la revendication 2, **caractérisée en ce qu'**un renfoncement (24) est réalisé dans un corps de base (22) de l'induit de soupape (20) au niveau d'une extrémité tournée vers le siège de soupape (15.1), lequel renfoncement reçoit en partie le poussoir (40) et un insert d'induit (30), le premier ressort de rappel (48) agissant entre le composant de guidage fixe (50) et le poussoir (40), et le poussoir (40) étant guidé radialement dans une première ouverture de passage (53) du composant de guidage fixe (50) et dans une deuxième ouverture de passage (31) de l'insert d'induit (30) et pouvant être déplacé par l'induit de soupape (20) axialement dans la direction du noyau polaire (30) et par le premier ressort de rappel (48) dans la direction du siège de soupape (15.1).

4. Soupape électromagnétique selon la revendication 3, **caractérisée en ce que** le poussoir (40) présente un corps de base cylindrique (42) au niveau duquel sont réalisées une première géométrie de guidage (43) et une deuxième géométrie de guidage (44) espacée dans la direction longitudinale, la première géométrie de guidage (43) du poussoir (40), dans le cas du déplacement axial du poussoir (40), coopérant avec une troisième géométrie de guidage (54) réalisée au niveau du corps de base (52) du composant de guidage (50), et la deuxième géométrie de guidage (44) du poussoir (40) coopérant avec une quatrième géométrie de guidage (36) réalisée au niveau du corps de base (32) de l'insert d'induit (30).

5. Soupape électromagnétique selon la revendication 3 ou 4, **caractérisée en ce que** l'induit de soupape (20) présente un corps de base cylindrique (22) qui est guidé radialement au niveau d'une paroi intérieure de la douille de guidage (13), une portion cylindrique (34) du corps de base (32) de l'insert d'induit (30) étant introduite dans une portion correspondante du renfoncement (24) de l'induit de soupape (20) et présentant la quatrième géométrie de guidage (36), et l'insert d'induit (30) présentant une cinquième géométrie de guidage (33) qui, dans le cas d'un déplacement axial de l'induit de soupape (20), coopère avec une sixième géométrie de guidage (56) du corps de base (52) du composant de guidage fixe (50) et guide axialement l'induit de soupape (20).

6. Soupape électromagnétique selon la revendication 5, **caractérisée en ce que** la cinquième géométrie de guidage (33) présente au moins deux branches de guidage (33.1) qui sont reliées à la portion cylindrique (34) du corps de base (32), la sixième géométrie de guidage (56) comprenant au moins deux ouvertures (56.1) dans le corps de base (52) du composant de guidage fixe (50), dont les dimensions sont adaptées aux dimensions des branches de guidage (33.1), les au moins deux branches de guidage (33.1) étant à chaque fois introduites dans l'une des ouvertures (56.1) et, dans le cas d'un déplacement axial de l'induit de soupape (20), étant guidées axialement dans celles-ci.

7. Soupape électromagnétique selon l'une quelconque des revendications 4 à 6, **caractérisée en ce que** la première géométrie de guidage (43) comprend plusieurs premières formations (43.1) réparties de manière uniforme sur la périphérie du corps de base (42) du poussoir (40), lesquelles présentent à chaque fois un biseau unilatéral (43.2), la troisième géométrie de guidage (54) du composant de guidage fixe (50) présentant, au niveau d'une paroi de la première ouverture de passage (53), avec une répartition angulaire uniforme, des rainures axiales (54.1, 54.2) avec au moins deux profondeurs différentes dans la direction radiale, des nervures intermédiaires (54.4) des rainures axiales (54.1, 54.2) présentant des biseaux unilatéraux (54.5) qui sont adaptés aux biseaux unilatéraux (43.2) des premières formations (43.1) du poussoir (40).

8. Soupape électromagnétique selon la revendication 7, **caractérisée en ce que** la deuxième géométrie de guidage (44) comprend, au niveau d'une première extrémité du poussoir (40), plusieurs deuxièmes formations (44.1) qui sont disposées de manière décalée de manière répartie uniformément par rapport aux premières formations (43.1) sur la périphérie du corps de base (42) du poussoir (40) et qui présentent à chaque fois un biseau unilatéral (44.2), et qui, dans le cas du déplacement axial dans la direction du noyau polaire (11), s'appuient sur la quatrième géométrie de guidage (36) de l'insert d'induit (30) qui comprend, au niveau du bord de la deuxième ouverture de passage (31) de l'insert d'induit (30), des rainures (36.1) réalisées avec une répartition angulaire uniforme, avec des biseaux bilatéraux (36.2) qui sont adaptés aux biseaux unilatéraux (44.2) des deuxièmes formations (44.1) du poussoir (40).

9. Soupape électromagnétique selon la revendication 8, **caractérisée en ce que** l'induit de soupape (20), dans le cas d'un déplacement axial dans la direction du noyau polaire (11), provoqué par la force magnétique du module magnétique, entraîne l'insert d'induit introduit (30) et, avec les rainures (36.1) de l'insert d'induit (30), le poussoir (40) par le biais de ses deuxièmes formations (44.1), une force périphérique agissant sur le poussoir (40) par les biseaux (36.2) des rainures (36.1) et les biseaux (44.2) des deuxièmes formations (44.1) du poussoir (40) pendant le déplacement axial dans la direction du noyau polaire (11), laquelle force périphérique tente de faire tourner le poussoir (40) autour de son axe longitudinal, le guidage simultané des premières formations (43.1) du poussoir (40) dans les rainures axiales (54.1, 54.2) du composant de guidage fixe (50) et/ou des branches de guidage (33.1) de l'insert d'induit (30) dans les ouvertures (56.1) du composant de guidage fixe (50) empêchant ce mouvement de rotation tant que le poussoir (40) n'a pas atteint une course axiale prédéfinie et tant que les premières formations (43.1) du poussoir (40) n'ont pas quitté les rainures axiales (54.1, 54.2) du composant de guidage fixe (50) ni glissé plus profondément dans les rainures (36.1) du fait de la force périphérique qui est toujours active, les deuxièmes formations (44.1) du poussoir (40), du fait des biseaux (54.5) unilatéraux réalisés au niveau des nervures intermédiaires (54.4) des rainures axiales (54.1, 54.2), glissant dans les rainures axiales suivantes (54.1, 54.2) du composant de guidage fixe (50) et suivant le nouveau guidage par un mouvement radial, lorsque la course axiale de l'induit de soupape (20) et du poussoir (40) est réduite du fait de la force de ressort active du premier ressort de rappel (48), les deuxièmes formations (44.1) du poussoir (40) glissant simultanément dans la rainure respective suivante (36.1).

10. Soupape électromagnétique selon la revendication 9, **caractérisée en ce que** dans la position ouverte non alimentée en courant, au moins deux premières formations (43.1) du poussoir (40) sont retenues axialement à chaque fois dans une rainure axiale (54.2) plus plate dans la direction radiale, les biseaux (43.2) des premières formations (43.1) s'appliquant contre des biseaux (54.3) qui sont réalisés au niveau du bord des rainures axiales plus plates (54.2), et dans la position fermée non alimentée en courant, toutes les premières formations (43.1) du poussoir (40) étant guidées à chaque fois dans une rainure axiale (54.1) plus profonde dans la direction radiale jusqu'à ce que l'élément de fermeture (46) vienne en butée dans le siège de soupape (15.1).

11. Soupape électromagnétique selon l'une quelconque des revendications 1 à 10, **caractérisée en ce qu'**un deuxième ressort de rappel (16) est disposé entre l'induit de soupape (20) et le noyau polaire (30), lequel déplace l'induit de soupape (20) dans la direction du siège de soupape (15.1).

12. Soupape électromagnétique selon la revendication 11, **caractérisée en ce qu'**un logement de ressort (21) est réalisé dans le corps de base (22) de l'induit de soupape (20), lequel logement de ressort reçoit au moins en partie le deuxième ressort de rappel (16).

13. Soupape électromagnétique selon l'une quelconque des revendications 4 à 12, **caractérisée en ce que** le poussoir (40) est réalisé en plusieurs parties, le corps de base (42) du poussoir (40) étant interposé entre la première et la deuxième géométrie de guidage (43, 44).

14. Soupape électromagnétique selon l'une quelconque des revendications 5 à 13, **caractérisée en ce que** l'insert d'induit (30) est réalisé en plusieurs parties.

15. Système de freinage hydraulique (1) pour un véhicule, comprenant un cylindre de frein principal (5), une unité hydraulique (9) et plusieurs freins de roues (RR, FL, FR, RL), l'unité hydraulique (9) comprenant au moins deux circuits de freinage (BC1, BC2) pour la modulation de la pression de freinage dans les freins de roues (RR, FL, FR, RL), **caractérisé en ce que** les au moins deux circuits de freinage (BC1, BC2) présentent chacun au moins une soupape électromagnétique bistable (10) qui est réalisée selon au moins l'une des revendications 1 à 14, et qui, dans la position ouverte non alimentée en courant, libère la modulation de pression de freinage dans au moins un frein de roue associé (RR, FL, FR, RL) et, dans la position fermée non alimentée en courant, renferme une pression de freinage actuelle dans l'au moins un frein de roue associé (RR, FL, FR, RL).
